# FASCICULE DE BREVET EUROPEEN

(11) **EP 3 686 549 B1**
(45) Date de publication et mention de la délivrance du brevet: **19.05.2021**
(21) Numéro de dépôt: 20150828.0
(22) Date de dépôt: 09.01.2020
(51) Int. Cl.: G01B 11/24, B60M 1/28

(54) **DISPOSITIF DE MESURE SANS CONTACT D'UNE ÉPAISSEUR D'UN FIL DE CONTACT D'UNE CATÉNAIRE**
KONTAKTLOSE MESSVORRICHTUNG DER DICKE EINES KONTAKTDRAHTS EINER OBERLEITUNG
DEVICE FOR CONTACTLESS MEASUREMENT OF THE THICKNESS OF A CONTACT WIRE OF AN OVERHEAD LINE

(30) Priorité: 18.01.2019 FR 1900453
(43) Date de publication de la demande: 29.07.2020
(73) Titulaire: 4NRJ, 41330 Villefrancoeur (FR)
(72) Inventeur: GASSELIN, Benoît, 41000 Blois (FR); LEGUEL, Anthony, 41190 Herbault (FR)
(74) Mandataire: Lequien, Philippe

(56) Documents cités:
- DE-U1- 9 402 465
- DE-U1-202017 001 346
- JP-A- H07 128 045
- US-A1- 2003 142 297

## Description

Le domaine de l'invention est celui de la conception et de la fabrication des équipements de maintenance pour les installations ferroviaires.

Plus précisément, l'invention concerne un dispositif de maintenance d'équipement pour l'alimentation en courant électrique de locomotrices de trains circulant sur une voie ferrée.

Dans le domaine de l'invention, il est connu de transmettre du courant électrique au train circulant sur une voie ferrée par l'intermédiaire d'au moins un fil de contact au-dessus de la voie ferrée.

Un tel fil de contact alimente en courant des pantographes qui sont situés sur la partie supérieure d'une locomotrice. Le pantographe est un dispositif qui permet à une locomotrice de capter le courant par frottement sur le fil de contact d'une caténaire.

Dans le domaine de l'invention, il est connu de suspendre un ou plusieurs fils de contact à un câble porteur par l'intermédiaire d'une succession de câbles verticaux dénommés pendules, dont les longueurs sont adaptées à maintenir le fil de contact sensiblement horizontal. L'ensemble formé par le fil de contact, les pendules et le câble porteur est classiquement désigné par caténaire (ou ligne aérienne de contact).

Une telle caténaire est supportée au-dessus de la voie ferrée par des poteaux de support disposés, de loin en loin, le long de la voie ferrée.

Un fil de contact d'une caténaire se présente classiquement sous la forme d'un élément longitudinal présentant, de préférence, deux rainures latérales et longitudinales de fixation pour permettre, en particulier, la liaison du fil de contact avec les pendules de la caténaire ou un câble porteur auxiliaire.

Bien entendu, au fur et à mesure des passages des trains, les pantographes des locomotrices frottent sur la face inférieure des fils de contact engendrant une usure de celui-ci. En pratique, cette usure se traduit par un méplat qui se forme sur la face inférieure du fil de contact, diminué en son épaisseur.

Lorsqu'un fil de contact est usé, celui-ci peut rompre et ainsi entraîner des dégâts importants sur la caténaire. Classiquement, une limite d'usure est définie pour un fil de contact, cette limite correspondant à une épaisseur minimale du fil de contact avant son remplacement.

Afin de limiter le risque de rupture, on surveille l'état d'usure du fil de contact, c'est-à-dire son épaisseur, pour en détecter les points faibles pouvant entraîner une rupture. Pour ce faire, l'usure du fil de contact est surveillée de manière périodique, manuellement ou automatiquement.

La surveillance automatique est réalisée au moyen d'engins (des locomotives équipées de pantographes spéciaux) qui parcourent périodiquement les réseaux ferroviaires pour mesurer l'épaisseur du fil de contact. Une telle surveillance automatique permet de détecter de manière rapide et pratique tout défaut d'usure. Il est à noter qu'une surveillance automatique nécessite obligatoirement une logistique importante en terme de personnels, d'outils roulant sur voie et de demande d'intervention pour travaux.

Les procédures et techniques de surveillance automatique de l'état d'usure du fil de contact sont prévues pour être relativement précises. Toutefois, en pratique, une fois qu'un défaut d'usure est détecté par les moyens de surveillance automatique, il est nécessaire d'inspecter manuellement l'épaisseur du fil de contact sur un tronçon de celui-ci correspondant à la zone le long de laquelle les moyens de détection automatique ont détecté un défaut d'usure.

Pour cela, un opérateur effectue une mesure de l'épaisseur du fil de contact, en se plaçant sensiblement à la hauteur de la caténaire, ceci par la mise en œuvre d'une nacelle ou d'une échelle. Les appareils de mesure utilisés sont alors le pied à coulisse ou le micromètre.

Un inconvénient majeur réside dans l'exécution de cette mesure manuelle, qui requiert notamment :
- de bloquer la circulation ferroviaire ;
- de mettre hors tension les installations ferroviaires ;
- de monopoliser de nombreux moyens humains (intervention en général de plusieurs agents) et matériels.

Une telle intervention engendre donc de nombreux inconvénients en termes de coût, de temps et de moyens d'exécution.

De plus, une telle intervention implique une problématique de sécurité, s'agissant de faire intervenir un ou plusieurs opérateurs en hauteur.

Pour pallier à ces inconvénients, il a été proposé un dispositif de mesure de l'épaisseur d'un fil de contact destiné à être porté par une perche. Un tel dispositif de mesure est décrit dans le document de brevet français publié sous le numéro FR3033883.

Ce dispositif de mesure comprend un bâti assemblé à l'extrémité supérieure d'une perche. Le bâti présente des moyens de mise en suspension du bâti sur un fil de contact, le bâti portant un premier élément et un deuxième élément formant un passage d'engagement du fil de contact, et comprenant des moyens de mesure de l'épaisseur du fil de contact à l'intérieur du passage d'engagement.

Selon cette technique, l'opérateur monte le dispositif de mesure au bout d'une perche pour mettre en suspension le dispositif sur un fil de contact en vue de réaliser une mesure de l'épaisseur du fil de contact.

Dans ce dispositif, les moyens de mesure comprennent deux éléments formant une mâchoire se refermant sur le fil de contact pour mesurer mécaniquement l'épaisseur de ce fil de contact. L'opérateur manipulant la perche doit déplacer le bâti le long du fil de contact en tractant ou en poussant la perche pour obtenir une cote d'épaisseur du fil de contact.

Un tel dispositif présente à l'usage plusieurs inconvénients.

En effet, il apparait que la mesure mécanique peut induire une incertitude sur la mesure effectuée du fait que la mâchoire peut ne pas se refermer exactement sur l'épaisseur du fil de contact.

Par exemple, il est possible que le méplat causé par l'usure ne soit pas parallèle au sol et/ou au plan de roulement formé par la voie ferrée (un fil de contact peut notamment être situé en côté d'un axe central de la voie ferrée, et le méplat peut alors être oblique par rapport au plan de roulement en fonction de la manière dont les pantographes viennent en contact sur le fil de contact).

Ainsi, si le dispositif est positionné sur le fil de contact en ayant sa mâchoire refermée de manière parallèle au plan de roulement, alors la cote mesurée à l'aide du dispositif ne correspond pas à l'épaisseur réelle du fil de contact depuis le méplat.

Il est également constaté que l'utilisation d'un tel type de dispositif peut être compliqué voire impossible à proximité immédiate d'un aiguillage. Le rapprochement de deux fils de contact au niveau de l'aiguillage diminue l'espace libre entre les fils de contact et peut empêcher le passage du bâti du dispositif.

En outre, on constate en pratique que le déplacement du dispositif de mesure le long du fil de contact s'opère par à-coups du fait d'arc-boutements successifs, ce qui peut nuire à la mesure et s'avère, en tout état de cause, très désagréable pour l'opérateur.

Enfin, la précision de la mesure peut ne pas être aussi bonne que celle mesurée manuellement par un opérateur à l'aide d'un pied à coulisse ou d'un micromètre.

DE 94 02 465 U1 montre un dispositif de mesure de l'épaisseur du fil de contact d'une caténaire à partir de moyens optiques de détection d'ombre projetée sur ledit fil.

L'invention a notamment pour objectif de pallier ces inconvénients de l'art antérieur.

Plus précisément, l'invention a pour objectif de proposer une technique de mesure de l'épaisseur d'un fil de contact d'une caténaire qui puisse être exécutée à partir du sol tout en assurant une prise de mesure satisfaisante de cette épaisseur.

Un autre objectif de l'invention est de fournir une telle technique qui permette de réaliser une mesure à proximité d'aiguillage où deux fils de contact peuvent se rapprocher l'un de l'autre et empêcher une mesure classique à l'aide d'un dispositif selon l'art antérieur.

L'invention a encore pour objectif de fournir une telle technique qui permet de procéder aisément à différentes mesures le long du fil de contact.

Ces objectifs, ainsi que d'autres qui apparaitront par la suite sont atteints grâce à l'invention, telle que décrite dans la revendication 1, qui a pour objet un dispositif de mesure d'une épaisseur d'un fil de contact d'une caténaire s'étendant au-dessus d'une voie ferrée, le fil de contact étant destiné à être en contact avec un pantographe d'un véhicule ferroviaire circulant sur la voie ferrée, le dispositif comprenant :
- un bâti destiné à être porté par une perche, le bâti présentant des moyens de mise en suspension du bâti sur le fil de contact, les moyens de mise en suspension formant un passage d'engagement du fil de contact et définissant un axe de déplacement du fil de contact dans le passage d'engagement ;
- des moyens de mesure de l'épaisseur du fil de contact à l'intérieur du passage d'engagement,
caractérisé en ce que les moyens de mesure de l'épaisseur comprennent :
- une source lumineuse configurée pour illuminer transversalement le fil de contact dans le passage d'engagement et créer une ombre projetée ;
- un capteur optique configuré pour capter l'ombre projetée du fil de contact ;
- des moyens de détermination d'une épaisseur du fil de contact à partir de l'ombre projetée du fil de contact.

Grâce au dispositif selon l'invention, il est possible de réaliser une mesure manuelle de l'épaisseur d'un fil de contact d'une caténaire à partir du sol tout en obtenant une mesure dont la précision est meilleure que celle pouvant être obtenue par un dispositif selon l'art antérieur, disposant d'une mâchoire mécanique à l'extrémité d'une perche.

Grâce au dispositif selon l'invention, l'épaisseur est déterminée à l'aide d'une source lumineuse et d'un capteur optique qui permettent de réaliser une mesure sans contact direct avec le fil de contact des moyens de mesure.

A la différence de l'art antérieur qui met en œuvre une mâchoire mécanique se refermant sur le fil de contact, les moyens de mesure du dispositif selon l'invention permettent d'obtenir la mesure de l'épaisseur sans introduire de source d'erreur relative à une prise de mesure mécanique.

Il appartient ainsi à l'opérateur de positionner correctement sa perche pour que, à un endroit donné, la mesure d'épaisseur qu'il obtient du dispositif corresponde bien à l'épaisseur du fil de contact depuis son méplat occasionné par l'usure.

Ainsi, par exemple dans le cas où le méplat est positionné parallèle au plan de roulement, alors l'opérateur doit se mettre en dessous du fil de contact en tenant sa perche perpendiculaire par rapport au plan de roulement de manière à ce que les capteurs et la source lumineuse permettent d'obtenir l'épaisseur recherchée.

Selon un autre exemple, si le méplat est oblique par rapport au plan de roulement, alors l'opérateur doit positionner la perche, et ainsi les moyens de mesure, en concordance avec cette orientation. Des moyens décrits par la suite facilitent cette tâche à l'opérateur.

De plus, grâce à la réalisation d'un contrôle sans contact, le déplacement du dispositif de mesure le long du fil de contact s'opère sans à-coups. Ainsi, la réalisation de plusieurs mesures successives le long du fil de contact s'avère aisée.

Selon une solution préférentielle, la source lumineuse comprend :
- au moins un émetteur d'un faisceau laser ;
- une lentille de collimation apte à réfracter le faisceau laser en une raie laser.

Grâce à cette solution, la raie laser est colimatée sur le capteur, ce qui permet d'avoir une ombre projetée d'une taille constante par rapport au profil du fil de contact analysé. Cette méthode de profilométrie laser se révèle particulièrement précise.

Selon une conception avantageuse, le bâti comprend un miroir de redirection de la raie laser, et l'émetteur et la lentille de collimation sont positionnés dans un boitier s'étendant en côté du passage d'engagement, le faisceau laser étant émis parallèlement à un axe de déplacement du fil de contact à l'intérieur du passage d'engagement et le miroir de redirection étant orienté à 45° par rapport au faisceau laser.

Grâce à cette conception du dispositif, l'encombrement produit par les moyens de mesure est contenu et le dispositif selon l'invention peut être utilisé aisément au niveau où deux fils de contact peuvent venir à proximité immédiate l'un de l'autre, et notamment empêcher une mesure de l'épaisseur du fil de contact avec un dispositif mécanique à mâchoire selon l'art antérieur.

Dans ce cas, selon une caractéristique préférée, le capteur optique est positionné dans le bâti à l'une des extrémités du passage d'engagement.

Selon cette conception, le bâti peut venir mesurer l'épaisseur du fil de contact au plus près d'un équipement susceptible d'empêcher le passage du bâti plus loin sur le fil de contact.

Selon une variante de réalisation préférée, le dispositif comprend un pare-soleil présentant une fente derrière laquelle le capteur optique est situé, le pare-soleil étant apte à limiter la perturbation du capteur optique par des rayons lumineux périphériques.

Un tel pare-soleil permet d'optimiser la mesure de l'épaisseur. Plus précisément, le pare-soleil limite l'arrivée jusqu'au capteur de rayons lumineux périphériques émis par une autre source lumineuse que celle du dispositif.

Selon un mode de réalisation préférée, le bâti présente, à son extrémité supérieure et perpendiculairement à un axe de déplacement du fil de contact à l'intérieur du passage d'engagement, une section de forme évasée vers le bas, le bâti présentant une face de guidage du fil de contact s'étendant depuis un sommet de la forme évasée jusqu'à un passage d'insertion du fil de contact dans le passage d'engagement.

Selon ce mode de réalisation, l'insertion du fil de contact dans le bâti est réalisée aisément.

En effet, il suffit à un opérateur magnant la perche sur laquelle le bâti est porté d'amener le bâti en contact avec le fil de contact par le dessous. Ensuite, soit l'opérateur a amené directement le fil de contact jusqu'au passage d'insertion du fil de contact, soit le fil de contact arrive et glisse sur la phase de guidage jusqu'au passage d'insertion du fil de contact dans le passage d'engagement.

Avantageusement, le bâti comprend des premiers roulements positionnés le long d'un axe de déplacement du fil de contact à l'intérieur du passage d'engagement et destinés à rouler sur le fil de contact.

De tels roulements permettent de faciliter le coulissement du bâti le long du fil de contact et ainsi la mesure.

Il est ainsi évité ou limité les frottements produits par le déplacement du bâti le long d'un fil de contact.

Une première partie des premiers roulements peut être située sur une face interne supérieure du bâti, dans le passage d'engagement. Cette première partie des premiers roulements est destinée à coopérer avec le fil de contact.

Le dispositif peut également comprendre une deuxième partie des premiers roulements qui est située et répartie sur une face interne latérale du bâti, dans le passage d'engagement.

Selon une conception préférentielle, le bâti comprend des deuxièmes roulements répartis parallèlement à l'axe de déplacement, sur une face extérieure du bâti, les deuxièmes roulements étant destinés à rouler sur un deuxième fil de contact adjacent au fil de contact destiné à être situé dans le passage d'engagement du dispositif.

Selon cette conception, lorsque le bâti est déplacé le long d'un fil de contact à un endroit où un second fil de contact se rapproche du premier fil de contact, alors le deuxième roulement facilite la progression du bâti sur le premier fil de contact en roulant le long du deuxième fil de contact.

Selon une variante de réalisation avantageuse, le dispositif comprend un inclinomètre.

Un tel inclinomètre permet de déterminer l'inclinaison du bâti par rapport à la verticale. L'inclinomètre se révèle avantageux en ce qu'il permet d'orienter le dispositif en fonction de l'inclinaison du méplat par rapport à la verticale.

Dans ce cas, le dispositif comprend préférentiellement une perche, et l'inclinomètre est porté par la perche.

Grâce à l'inclinomètre qui est directement porté par la perche, un opérateur réalisant la mesure de l'épaisseur peut aisément positionner correctement sa perche pour la bonne mesure de l'épaisseur du fil de contact.

Selon un mode de réalisation préféré, le dispositif comprend une unité électronique mobile disposant de moyens d'affichage, et il comprend des moyens de transmission de données sans fils couplés aux moyens de détermination d'une épaisseur, les moyens de transmission étant aptes à communiquer avec l'unité électronique mobile, les moyens d'affichage étant aptes à afficher l'épaisseur du fil de contact.

Une telle unité électronique mobile peut correspondre à un ordiphone.

Selon ce mode de réalisation, la réalisation et la lecture de l'épaisseur du fil de contact se révèle simple par un opérateur utilisant le dispositif.

Dans ce cas, l'unité électronique mobile comprend avantageusement l'inclinomètre, l'unité électronique mobile comprenant des moyens de d'assistance au positionnement de la perche selon une inclinaison appropriée à la mesure de l'épaisseur du fil de contact.

L'utilisation du dispositif est alors encore plus simple et aisée pour un utilisateur.

Il suffit alors à l'utilisateur, ou opérateur, d'installer le bâti sur un fil de contact, puis de jouer sur l'orientation de la perche pour lire, sur son unité électronique mobile, des données d'inclinaison, et faire coïncider cette inclinaison avec l'inclinaison optimale donnée et affichée par les moyens d'affichage de l'unité électronique mobile.

Selon une conception préférée, l'unité électronique mobile est paramétrée avec une côte d'épaisseur minimale du fil de contact en deçà de laquelle l'unité électronique mobile est programmée pour émettre une alerte.

Selon cette conception, lors de l'utilisation du dispositif, l'utilisateur est alors automatiquement alerté lorsque l'épaisseur du fil de contact passe en deçà d'une valeur préalablement paramétrée sur son unité électronique mobile.

Cette conception simplifie la mise en œuvre du dispositif et la mesure de l'épaisseur du fil de contact.

D'autres caractéristiques et avantages de l'invention apparaitront plus clairement à la lecture de la description suivante d'un mode de réalisation préférentiel de l'invention, donné à titre d'exemple illustratif et non limitatif, et des dessins annexés parmi lesquels :
- la figure 1 est une représentation schématique illustrant la mesure de l'épaisseur du fil de contact par profilométrie laser en captant l'ombre projetée du fil de contact ;
- la figure 2 est une vue en perspective du bâti du dispositif mesure de l'épaisseur du fil de contact par profilométrie, selon l'invention ;
- la figure 3 est une vue en perspective du dessus d'un bâti dans lequel un boîtier est retiré ;
- la figure 4 est une vue en perspective selon un autre angle de vue du bâti dépourvu de son boîtier protégeant un émetteur laser, une lentille de collimation et un miroir de redirection ;
- la figure 5 illustre la mise en place d'un fil de contact dans un passage d'engagement du bâti du dispositif selon l'invention ;
- la figure 6 est une deuxième illustration montrant l'utilisation du dispositif selon l'invention dans le cas où deux fils de contact sont positionnés et situés à un très faible écartement l'un de l'autre ;
- la figure 7 est une troisième illustration montrant l'utilisation du dispositif selon l'invention une fois ce dernier couplé sur un fil de contact et la détermination d'une position appropriée à la mesure de l'épaisseur du fil de contact.

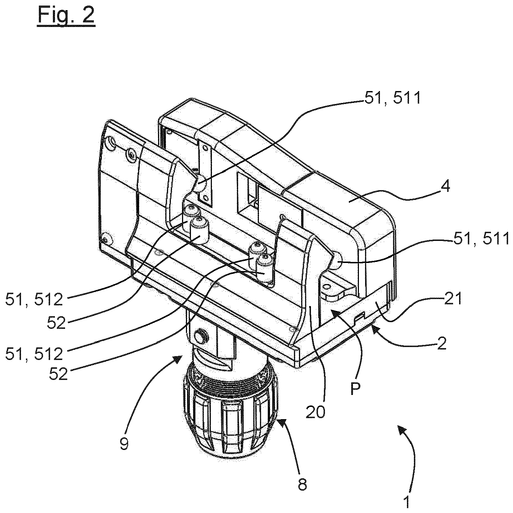

En référence aux figures 2 à 7, le dispositif 1 selon l'invention est un dispositif de mesure d'une épaisseur E d'un fil de contact 10 d'une caténaire s'étendant au-dessus d'une voie ferrée.

Un tel fil de contact 10 est destiné à être en contact avec un pantographe d'un véhicule ferroviaire circulant sur la voie ferrée située en dessous du fil de contact 10.

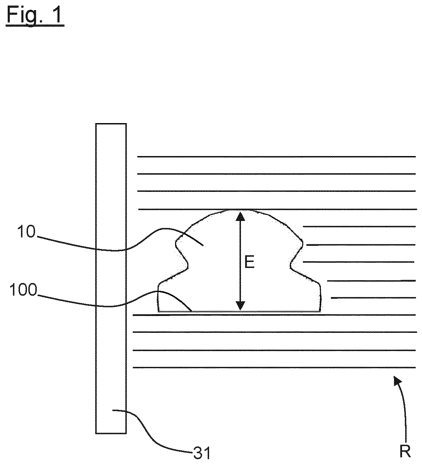

Le fil de contact 10, tel qu'illustré par la figure 1, présente:
- un méplat 100, créé et aggravé par les pantographes des véhicules ferroviaires, et
- une épaisseur E entre le méplat 100 et un sommet du fil de contact 10.

Selon le présent mode de réalisation illustré par les figures 2 à 7, le dispositif 1 comprend :
- une perche 7 ;
- un bâti 2 destiné à être porté par la perche 7 ;
- des moyens de mesure de l'épaisseur E du fil de contact 10.

Tel qu'illustré par les figures 2 à 7, le dispositif 1 comprend également :
- un organe d'assemblage 8 du bâti 2 à la perche 7 ;
- une articulation 9.

Cet organe d'assemblage 8 est apte à permettre la fixation du bâti 2 à l'extrémité de la perche 7 suite au vissage d'une bague.

L'articulation 9 est située entre le bâti et l'organe d'assemblage 8. L'articulation 9 est munie de ressorts produisant un amortissement évitant des à-coups lors du déplacement du bâti 2 le long d'un fil de contact 10.

Le bâti 2 présente des moyens de mise en suspension du bâti 2 sur le fil de contact 10.

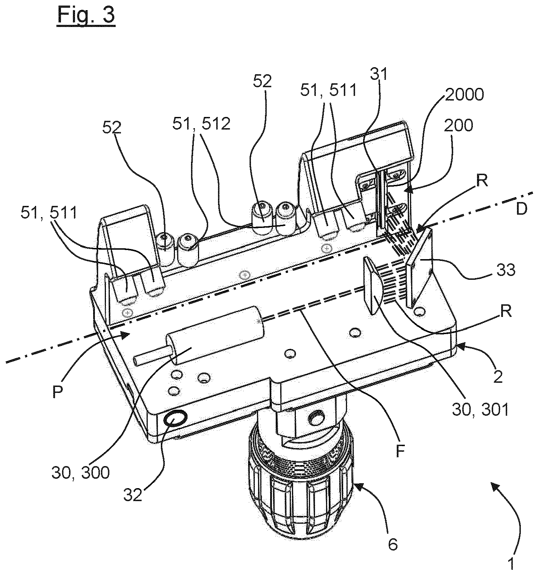

Ces moyens de mise en suspension forment un passage d'engagement P du fil de contact et définissent un axe de déplacement D (illustré par la figure 3) du fil de contact 10 dans le passage d'engagement P.

Ce passage d'engagement P correspond à un volume à l'intérieur du bâti 2 dans lequel un fil de contact 10, et plus précisément une portion du fil de contact 10, est destiné à être situé lors de la mesure de l'épaisseur E du fil de contact 10. Ce volume à l'intérieur du bâti 2 débouche de part et d'autre du bâti 2 de manière à ce que le bâti puisse être coulissé le long du fil de contact 10 pour permettre la mesure de l'épaisseur E du fil de contact 10 à en différents points du fil de contact 10.

A cet effet, les moyens de mesure de l'épaisseur du fil de contact 10 sont configurés pour mesurer cette épaisseur E à l'intérieur du passage d'engagement P.

En référence aux figures 1, 3 et 4, les moyens de mesure de l'épaisseur E comprennent :
- une source lumineuse 30 ;
- un capteur optique 31 ;
- des moyens de détermination 32 de l'épaisseur E du fil de contact 10.

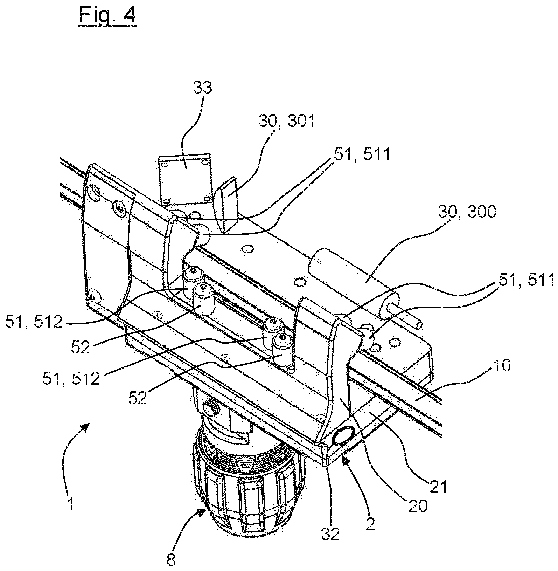

Tel qu'illustré par les figures 3 et 4, la source lumineuse 30 est configurée pour illuminer transversalement le fil de contact 10 dans le passage d'engagement P et ainsi créer une ombre projetée du fil de contact 10.

En référence aux figures 1 et 3, le capteur optique 31 est configuré pour capter l'ombre projetée du fil de contact 10 créé par la source lumineuse 30.

Les moyens de détermination 32 sont couplés au capteur optique 31. L'ombre projetée captée par le capteur optique 31 est utilisée par les moyens de détermination 32 pour obtenir l'épaisseur E du fil de contact 10.

Tel qu'illustré par les figures 3 et 4, la source lumineuse 30 comprend plus précisément :
- un émetteur 300 d'un faisceau laser F ;
- une lentille de collimation 301 réfractant le faisceau laser F en une raie laser R.

La collimation produite par le faisceau laser F et la lentille de collimation 301 permet de maintenir la taille de l'ombre projetée constante.

La lentille de collimation 301 est notamment une lentille cylindrique. Elle est plus précisément une lentille cylindrique de 25 mm de haut avec une focale de 50 mm.

Le dispositif 1 comprend en outre un miroir de redirection 33 de la raie laser R.

L'émetteur 300 et la lentille de collimation 301 sont positionnés de manière à ce que le faisceau laser F et la raie laser R, au sortir de la lentille de collimation 301, soient parallèles à l'axe de déplacement D du fil de contact 10 à l'intérieur du passage d'engagement P.

Le miroir de redirection 33 est quant à lui orienté à 45° par rapport au faisceau laser F de manière à ce que la raie laser R soit redirigée selon un angle à 90°. L'orientation du miroir de redirection 33 est configurée pour que la raie laser R vienne illuminer transversalement le fil de contact 10 situé dans le passage d'engagement P.

Tel qu'illustré par la figure 3, le capteur optique 31 est un capteur linéaire. Ce capteur optique 31 est plus précisément un capteur linéaire permettant de capter l'ombre projetée du fil de contact 10. Le capteur optique peut par exemple acquérir la mesure en temps réel à un rythme de 5 000 lignes par seconde.

Les moyens de détermination 32 mettent par exemple en œuvre un procédé de traitement de l'image en logique câblée au sein d'un circuit intégré qui assure le pilotage du capteur optique.

Ces moyens de détermination 32 convertissent le signal, le traitent et calculent l'épaisseur E du fil de contact 10 par l'intermédiaire de son ombre projetée.

En référence aux figures 2, 3, et 4, le bâti 2 comprend une plateforme 21 sur laquelle s'élève une partie latérale 20 et un boîtier 4.

La partie latérale 20, la plateforme 21 et le boîtier 4 définissent ensemble :
- le passage d'engagement P du fil de contact 10 ;
- un passage d'insertion I du fil de contact 10 dans le passage d'engagement P.

La plateforme 21 intègre les moyens de détermination 32.

Selon le présent mode de réalisation, l'émetteur 300, le miroir de redirection 33 et la lentille de collimation 301 sont positionnés et protégés dans le boîtier 4.

Le capteur optique 301 est positionné dans le bâti 2 et plus précisément dans la partie latérale 20 en étant opposé au miroir de redirection 33 par rapport à un axe de déplacement D du fil de contact 10 à l'intérieur du passage d'engagement P. Ce capteur optique 31 est positionné à l'une des extrémités du passage d'engagement P.

En référence à la figure 3, le dispositif 1 comprend également un pare-soleil 200 destiné à protéger le capteur optique 31.

Plus précisément, ce pare-soleil 200 est présenté par la partie latérale 20 du bâti 2. Ce pare soleil 200 présente une fente 2000 derrière laquelle le capteur optique 31 est situé. Les parois du pare-soleil 200 entourant la fente, protègent le capteur optique 31 et limitent les perturbations lumineuses du capteur optique 31 par des rayons lumineux périphériques qui ne seraient pas émis par la source lumineuse 30 du dispositif 1.

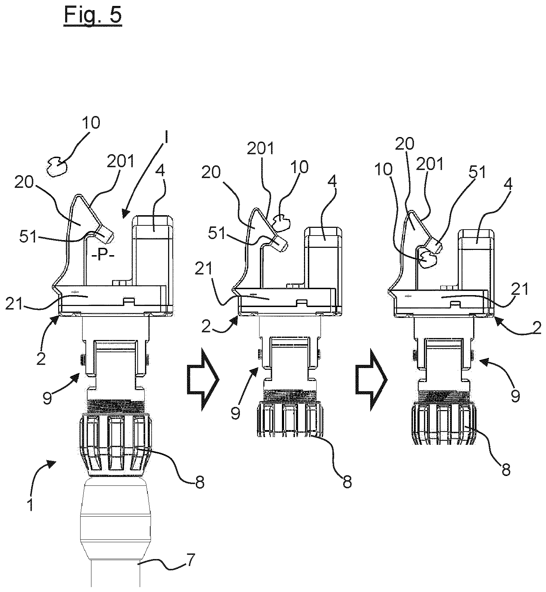

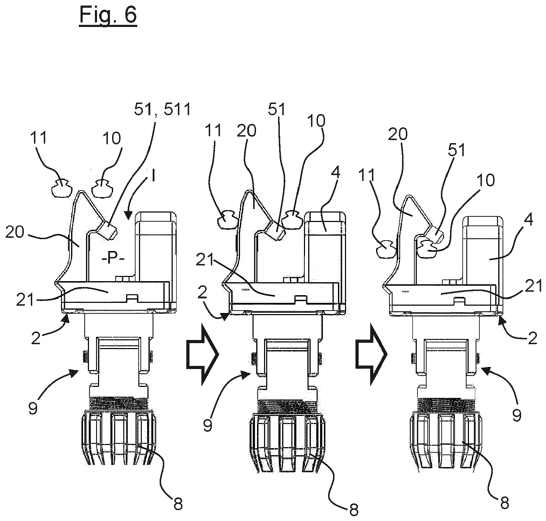

Tel qu'illustré par les figures 5 et 6, la partie latérale 20 du bâti 2 forme les moyens de mise en suspension du bâti 2 sur le fil de contact 10.

En effet, la partie latérale 20 présente une section en forme de crochet permettant, une fois le fil de contact 10 positionné dans le passage d'engagement P, de maintenir le bâti 2 suspendu sur le fil de contact 10.

La partie latérale 20 du bâti 2 présente, à son extrémité supérieure, et perpendiculairement à l'axe de placement D du fil de contact 10 à l'intérieur du passage d'engagement P, une section de forme évasée vers le bas, c'est-à-dire vers la perche 7.

Le bâti 2, et plus précisément sa partie latérale 20, présente une face de guidage 201 du fil de contact 10 qui s'étend depuis un sommet de la forme évasée jusqu'au passage d'insertion I du fil de contact 10 dans le passage d'engagement P.

Le bâti 2 comprend également des premiers roulements 51 positionnés le long de l'axe de déplacement D du fil de contact 10 à l'intérieur du passage d'engagement P.

Ces premiers roulements 51 sont destinés à rouler sur le fil de contact 10 lors de déplacements du bâti 2 le long du fil de contact 10.

Les premiers roulements 51 sont portés par la partie latérale 20 du bâti 2. Les premiers roulements 51 sont notamment composés :
- d'une première partie 511 positionnée sur une face interne supérieure du bâti 2 dans le passage d'engagement P ;
- d'une deuxième partie 512 située sur une face interne latérale du bâti 2 dans le passage d'engagement P.

Le bâti 2, et plus précisément la partie latérale 20 comprend encore des deuxièmes roulements 52.

Ces deuxièmes roulements 52 ne sont pas destinés à coopérer avec le (premier) fil de contact 10 mais avec un deuxième fil de contact 11, différent du (premier) fil de contact 10.

Les deuxièmes roulements 52 sont répartis parallèlement à l'axe de déplacement D, sur une face extérieure du bâti 2. Les deuxièmes roulements 52 sont notamment répartis sur une face extérieure de la partie latérale 20, à une même hauteur que la deuxième partie 512 des premiers roulements 51.

En d'autres termes, les deuxièmes roulements 52 sont situés au même niveau que la deuxième partie 512 des premiers roulements 51.

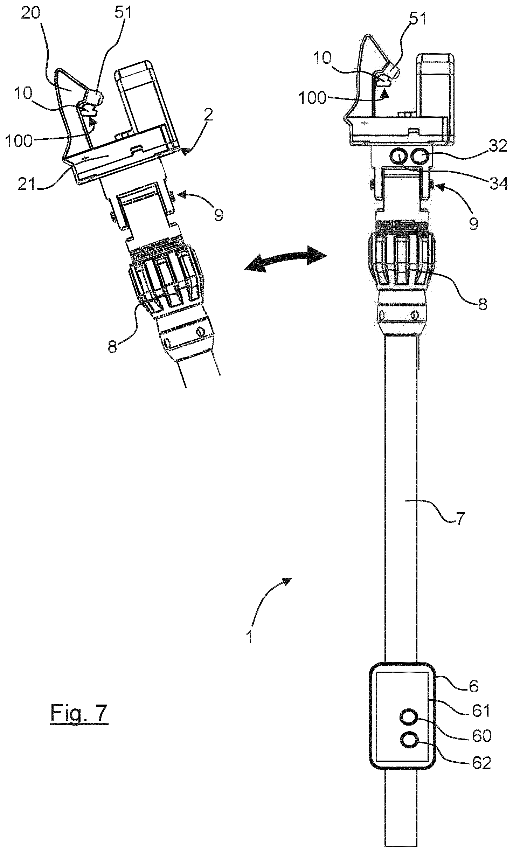

Selon le présent mode de réalisation et tel qu'illustré par la figure 7, le dispositif 1 comprend également des moyens de transmission 34 de données sans fil.

Ces moyens de transmission 34 sont couplés au moyen de détermination 32 d'une épaisseur E. Ces moyens de transmission 34 permettent de communiquer avec un appareil électronique compatible pour communiquer l'épaisseur E du fil de contact 10 déterminée.

Ces moyens de transmission 34 et ces moyens de détermination 32 sont portés par le bâti 2.

En référence à la figure 7, le dispositif 1 comprend également une unité électronique mobile 6. Cette unité électronique mobile 6 est notamment un ordiphone.

L'unité électronique mobile 6 comprend :
- des moyens d'affichage 61 ;
- un inclinomètre 60 ;
- des moyens d'assistance 62 au positionnement de la perche 7 selon une inclinaison appropriée à la mesure de l'épaisseur E du fil de contact 10.

Le dispositif 1 comprend des moyens d'assemblage de l'unité électronique mobile 6 sur la perche 7.

De cette manière, l'inclinomètre 60 de l'unité électronique mobile est également porté par la perche.

Selon le présent mode de réalisation, l'unité électronique mobile 6 comprend un gyroscope faisant office d'inclinomètre 60.

L'unité électronique mobile 6 peut être paramétrée avec une côte d'épaisseur minimale du fil de contact 10. En dessous de cette côte d'épaisseur, l'unité électronique mobile 6 est paramétrée pour émettre une alerte.

C'est-à-dire qu'en fonction de l'épaisseur E du fil de contact 10 donnée par les moyens de détermination 32 et transmis par des moyens de transmission 34 de données sans fil jusqu'à l'unité électronique mobile 6, l'unité électronique mobile 6 émet une alerte si une côte d'épaisseur minimale est dépassée.

En référence à la figure 5, l'insertion d'un fil de contact 10 dans le passage d'engagement P est décrite ci-après.

Un opérateur déplace la perche 7 de manière à ce que le bâti 2 soit positionné au-dessous du fil de contact 10.

Ensuite, la perche 7 est relevée pour que le fil de contact 10 se dirige vers le passage d'insertion I. Le fil de contact 10 glisse alors le long de la face de guidage 201 pour arriver dans le passage d'insertion I.

Une fois que le fil de contact 10 a franchi la première partie 511 des premiers roulements 51, alors l'opérateur décale la perche pour positionner le fil de contact 10 dans le passage d'engagement P et crocheter le fil de contact 10 dans le bâti 2, suspendant, de la sorte, le bâti 2 au fil de contact 10.

L'opérateur déplace alors la perche 7 pour faire glisser le bâti le long du fil de contact 10 et mesurer l'épaisseur du fil de contact 2.

En référence à la figure 6, l'insertion d'un fil de contact 10 dans le passage d'engagement P est décrit ci-après, selon une autre configuration de caténaire.

Dans cette configuration, la caténaire comprend un premier fil de contact 10 et un second fil de contact 11 proches l'un de l'autre.

Pour procéder à l'insertion du fil de contact 10 dans le passage d'engagement P, l'opérateur réalise les mêmes actions/étapes que celles précédemment décrites.

En effet, la forme du bâti 2 et de sa partie latérale 20 permet de séparer les fils de contact 10, 11 lorsque la perche 7 est remontée. Cette séparation est permise par la forme évasée de l'extrémité haute du bâti 2, ou en d'autre terme sa forme en pointe.

Par la suite, l'opérateur fait coulisser le bâti 2 sur le premier fil de contact 10, les premiers roulements 51 accompagnant le déplacement du fil de contact 10 dans le passage d'engagement P, et les deuxièmes roulements 52 accompagnant le déplacement du second fil de contact 11 le long de la partie latérale 20 du bâti 2.

Enfin, en référence à la figure 7, la détermination de l'inclinaison appropriée de la mesure de l'épaisseur d'un fil de contact à l'aide du dispositif 1 est décrite ci-après.

Selon le mode de réalisation illustré, une unité électronique mobile 6 (un ordiphone) est fixée à la perche.

Suite à la mise en suspension du bâti 2 sur le fil de contact 10, l'opérateur fait basculer le bâti 2 autour du fil de contact 10. Ce basculement, ainsi que la captation en temps réel du profil du fil de contact 10 par les moyens de mesure de l'épaisseur, et les données issues de l'inclinomètre 60, permet de déterminer une position de la perche 7 dans laquelle elle présente l'inclinaison adaptée à la mesure correcte de l'épaisseur E du fil de contact 10.

Cette inclinaison adaptée est illustrée par la figure 1 dans laquelle la raie laser est émise parallèlement au méplat 100 du fil de contact 10.

Par la suite, l'unité électronique mobile 6 indique l'inclinaison optimale de la perche 7 ainsi que l'inclinaison en temps réel de la perche 7 de manière à ce que l'opérateur puisse réaliser correctement la mesure de l'épaisseur E du fil de contact.

Il suffit ensuite à l'opérateur de faire coulisser le bâti 2 le long du fil de contact 10 en conservant cette inclinaison.

## Revendications

1. Dispositif (1) de mesure d'une épaisseur (E) d'un fil de contact (10) d'une caténaire s'étendant au-dessus d'une voie ferrée, le fil de contact étant destiné à être en contact avec un pantographe d'un véhicule ferroviaire circulant sur la voie ferrée, le dispositif comprenant :
- un bâti (2) destiné à être porté par une perche (7), le bâti présentant des moyens de mise en suspension du bâti sur le fil de contact, les moyens de mise en suspension formant un passage d'engagement (P) du fil de contact et définissant un axe de déplacement (D) du fil de contact dans le passage d'engagement ;
- des moyens de mesure de l'épaisseur du fil de contact à l'intérieur du passage d'engagement,
**caractérisé en ce que** les moyens de mesure de l'épaisseur comprennent :
- une source lumineuse (30) configurée pour illuminer transversalement le fil de contact dans le passage d'engagement et créer une ombre projetée ;
- un capteur optique (31) configuré pour capter l'ombre projetée du fil de contact ;
- des moyens de détermination (32) d'une épaisseur du fil de contact à partir de l'ombre projetée du fil de contact mesurée par le capteur optique.

2. Dispositif (1) selon la revendication précédente, **caractérisé en ce que** la source lumineuse comprend :
- au moins un émetteur (300) d'un faisceau laser (F) ;
- une lentille de collimation (301) apte à réfracter le faisceau laser en une raie laser (R).

3. Dispositif (1) selon la revendication précédente, **caractérisé en ce que** le bâti (2) comprend un miroir de redirection (33) de la raie laser (R), et **en ce que** l'émetteur (300) et la lentille de collimation (301) sont positionnés dans un boitier (4) s'étendant en côté du passage d'engagement (P), le faisceau laser (F) étant émis parallèlement à un axe de déplacement (D) du fil de contact (10) à l'intérieur du passage d'engagement (P) et le miroir de redirection étant orienté à 45° par rapport au faisceau laser (F).

4. Dispositif (1) selon l'une quelconque des revendications précédentes, **caractérisé en ce que** le capteur optique (31) est positionné dans le bâti (2) à l'une des extrémités du passage d'engagement (P).

5. Dispositif (1) selon la revendication précédente, **caractérisé en ce qu'**il comprend un pare-soleil (200) présentant une fente (2000) derrière laquelle le capteur optique (31) est situé, le pare-soleil étant apte à limiter la perturbation du capteur optique par des rayons lumineux périphériques.

6. Dispositif (1) selon l'une quelconque des revendications précédentes, **caractérisé en ce que** le bâti (2) présente, à son extrémité supérieure et perpendiculairement à un axe de déplacement (D) du fil de contact (10) à l'intérieur du passage d'engagement (P), une section de forme évasée vers le bas, le bâti présentant une face de guidage (201) du fil de contact s'étendant depuis un sommet de la forme évasée jusqu'à un passage d'insertion (I) du fil de contact dans le passage d'engagement (P).

7. Dispositif (1) selon l'une quelconque des revendications précédentes, **caractérisé en ce que** le bâti (2) comprend des premiers roulements (51) positionnés le long d'un axe de déplacement (D) du fil de contact (10) à l'intérieur du passage d'engagement (P) et destinés à rouler sur le fil de contact.

8. Dispositif (1) selon la revendication précédente, **caractérisé en ce que** le bâti (2) comprend des deuxièmes roulements (52) répartis parallèlement à l'axe de déplacement (D), sur une face extérieure du bâti, les deuxièmes roulements étant destinés à rouler sur un deuxième fil de contact (11) adjacent au fil de contact destiné à être situé dans le passage d'engagement du dispositif.

9. Dispositif (1) selon l'une quelconque des revendications précédentes, **caractérisé en ce qu'**il comprend un inclinomètre (60).

10. Dispositif (1) selon la revendication précédente, **caractérisé en ce qu'**il comprend une perche (7), et **en ce que** l'inclinomètre (60) est porté par la perche.

11. Dispositif (1) selon l'une quelconque des revendications précédentes, **caractérisé en ce qu'**il comprend une unité électronique mobile (6) disposant de moyens d'affichage (61),
et **en ce qu'**il comprend des moyens de transmission (34) de données sans fils couplés aux moyens de détermination (32) d'une épaisseur (E), les moyens de transmission étant aptes à communiquer avec l'unité électronique mobile, les moyens d'affichage étant aptes à afficher l'épaisseur (E) du fil de contact (10).

12. Dispositif (1) selon les revendications 10 et 11, **caractérisé en ce que** l'unité électronique mobile (6) comprend l'inclinomètre (60), l'unité électronique mobile comprenant des moyens de d'assistance (62) au positionnement de la perche (7) selon une inclinaison appropriée à la mesure de l'épaisseur (E) du fil de contact (10).

13. Dispositif (1) selon l'une quelconque des revendications 11 et 12, **caractérisé en ce que** l'unité électronique mobile (6) est paramétrée avec une côte d'épaisseur minimale du fil de contact (10) en deçà de laquelle l'unité électronique mobile est programmée pour émettre une alerte.

## Patentansprüche

1. Messvorrichtung (1) einer Dicke (E) eines Kontaktdrahts (10) einer Oberleitung, die sich oberhalb eines Schienenwegs erstreckt, wobei der Kontaktdraht bestimmt ist, mit einem Stromabnehmer eines Schienenfahrzeugs, das auf dem Schienenweg fährt, in Kontakt zu sein, wobei die Vorrichtung umfasst:
- einen Grundkörper (2), bestimmt, um von einer Stange (7) getragen zu werden, wobei der Grundkörper Mittel zum Aufhängen des Grundkörpers auf den Kontaktdraht aufweist, wobei die Mittel zum Aufhängen des Grundkörpers einen Eingriffsdurchgang (P) des Kontaktdrahts bilden und eine Verschiebungsachse (D) des Kontaktdrahts in dem Eingriffsdurchgang definieren;
- Mittel zum Messen der Dicke des Kontaktdrahts im Inneren des Eingriffsdurchgangs,
**dadurch gekennzeichnet, dass** die Mittel zum Messen der Dicke umfassen:
- eine Lichtquelle (30), konfiguriert zum Beleuchten des Kontaktdrahts in dem Eingriffsdurchgang in Querrichtung und zum Erzeugen eines projizierten Schattens;
- einen optischen Sensor (31), konfiguriert, um den projizierten Schatten des Kontaktdrahts zu erfassen;
- Mittel zur Bestimmung (32) einer Dicke des Kontaktdrahts ausgehend von dem durch den optischen Sensor gemessenen projizierten Schatten des Kontaktdrahts.

2. Vorrichtung (1) nach dem vorstehenden Anspruch, **dadurch gekennzeichnet, dass** die Lichtquelle umfasst:
- mindestens einen Emitter (300) eines Laserstrahls (F);
- eine Kollimationslinse (301), geeignet, um den Laserstrahl in eine Laserlinie (R) zu brechen.

3. Vorrichtung (1) nach dem vorstehenden Anspruch, **dadurch gekennzeichnet, dass** der Grundkörper (2) einen Umlenkspiegel (33) der Laserlinie (R) umfasst, und dadurch, dass der Emitter (300) und die Kollimationslinse (301) in einem Gehäuse (4) positioniert sind, das sich neben dem Eingriffsdurchgang (P) erstreckt, wobei der Laserstrahl (F) parallel zu einer Verschiebungsachse (D) des Kontaktdrahts (10) im Inneren des Eingriffsdurchgangs (P) emittiert wird und der Umlenkspiegel bezogen auf den Laserstrahl (F) bei 45° orientiert ist.

4. Vorrichtung (1) nach einem der vorstehenden Ansprüche, **dadurch gekennzeichnet, dass** der optische Sensor (31) in dem Grundkörper (2) an einem der Enden des Eingriffsdurchgangs (P) positioniert ist.

5. Vorrichtung (1) nach dem vorstehenden Anspruch, **dadurch gekennzeichnet, dass** sie eine Sonnenschutzblende (200) umfasst, die einen Schlitz (2000) aufweist, hinter dem der optische Sensor (31) liegt, wobei die Sonnenschutzblende geeignet ist, um die Störung des optischen Sensors durch periphere Lichtstrahlen zu begrenzen.

6. Vorrichtung (1) nach einem der vorstehenden Ansprüche, **dadurch gekennzeichnet, dass** der Grundkörper (2) an seinem oberen Ende und senkrecht zu einer Verschiebungsachse (D) des Kontaktdrahts (10) im Inneren des Eingriffsdurchgangs (P) eine Sektion von sich nach unten aufweitender Form aufweist, wobei der Grundkörper eine Führungsfläche (201) des Kontaktdrahts aufweist, die sich ab einem Scheitelpunkt der aufgeweiteten Form bis zu einem Einführungsdurchgang (I) des Kontaktdrahts in dem Eingriffsdurchgang (P) erstreckt.

7. Vorrichtung (1) nach einem der vorstehenden Ansprüche, **dadurch gekennzeichnet, dass** der Grundkörper (2) erste Laufrollen (51) umfasst, positioniert entlang einer Verschiebungsachse (D) des Kontaktdrahts (10) im Inneren des Eingriffsdurchgangs (P) und bestimmt, um auf dem Kontaktdraht zu rollen.

8. Vorrichtung (1) nach dem vorstehenden Anspruch, **dadurch gekennzeichnet, dass** der Grundkörper (2) zweite Laufrollen (52) auf einer Außenseite des Grundkörpers auf der Verschiebungsachse (D) parallel verteilt umfasst, wobei die zweiten Laufrollen bestimmt sind, auf einem zweiten Kontaktdraht (11) angrenzend an den Kontaktdraht, bestimmt, um in dem Eingriffsdurchgang der Vorrichtung zu liegen, zu rollen.

9. Vorrichtung (1) nach einem der vorstehenden Ansprüche, **dadurch gekennzeichnet, dass** sie einen Neigungsmesser (60) umfasst.

10. Vorrichtung (1) nach dem vorstehenden Anspruch, **dadurch gekennzeichnet, dass** sie eine Stange (7) umfasst und dadurch, dass der Neigungsmesser (60) von der Stange getragen wird.

11. Vorrichtung (1) nach einem der vorstehenden Ansprüche, **dadurch gekennzeichnet, dass** sie eine mobile elektronische Einheit (6) umfasst, die über Anzeigemittel (61) verfügt, und dadurch, dass sie Mittel zur drahtlosen Übertragung (34) von Daten umfasst, gekoppelt an die Mittel zur Bestimmung (32) einer Dicke (E), wobei die Mittel zur Übertragung geeignet sind, mit der mobilen elektronischen Einheit zu kommunizieren, wobei die Anzeigemittel geeignet sind, die Dicke (E) des Kontaktdrahts (10) anzuzeigen.

12. Vorrichtung (1) nach den Ansprüchen 10 und 11, **dadurch gekennzeichnet, dass** die mobile elektronische Einheit (6) den Neigungsmesser (60) umfasst, wobei die mobile elektronische Einheit Unterstützungsmittel (62) zur Positionierung der Stange (7) gemäß einer zur Messung der Dicke (E) des Kontaktdrahts (10) angemessenen Neigung umfasst.

13. Vorrichtung (1) nach einem der Ansprüche 11 und 12, **dadurch gekennzeichnet, dass** die mobile elektronische Einheit (6) mit einer Ausdehnung minimaler Dicke des Kontaktdrahts (10) parametrisiert ist, unterhalb derer die mobile elektronische Einheit programmiert ist, einen Alarm zu emittieren.

## Claims

1. A device (1) for measuring a thickness (E) of a contact wire (10) of an overhead catenary extending above a railway, the contact wire being intended to be in contact with a pantograph of a rail vehicle circulating on the railway, the device comprising:
- a frame (2) intended to be carried by a pole (7), the frame having means for suspending the frame over the contact wire, the suspension means forming a passage for engaging (P) the contact wire and defining an axis of displacement (D) of the contact wire in the engagement passage;
- means for measuring the thickness of the contact wire inside the engagement passage,
**characterized in that** the means for measuring the thickness comprise:
- a light source (30) configured to transversely illuminate the contact wire in the engagement passage and create a projected shadow;
- an optical sensor (31) configured to capture the projected shadow of the contact wire;
- means (32) for determining a thickness of the contact wire from the projected shadow of the contact wire measured by the optical sensor.

2. The device (1) according to the preceding claim, **characterized in that** the light source comprises:
- at least one emitter (300) of a laser beam (F);
- a collimating lens (301) adapted to refract the laser beam into a laser line (R).

3. The device (1) according to the preceding claim, **characterized in that** the frame (2) comprises a mirror (33) for redirecting the laser line (R), and **in that** the emitter (300) and the collimating lens (301) are positioned in a case (4) extending aside the engagement passage (P), the laser beam (F) being emitted parallel to an axis of displacement (D) of the contact wire (10) inside the engagement passage (P) and the redirecting mirror being directed at 45° with respect to the laser beam (F).

4. The device (1) according to any one of the preceding claims, **characterized in that** the optical sensor (31) is positioned in the frame (2) at one of the ends of the engagement passage (P).

5. The device (1) according to the preceding claim, **characterized in that** it comprises a sunshield (200) having a slot (2000) behind which the optical sensor (31) is located, the sunshield being adapted to limit the disturbance of the optical sensor by peripheral light rays.

6. The device (1) according to any one of the preceding claims, **characterized in that** the frame (2) has, at its upper end and perpendicularly to an axis of displacement (D) of the contact wire (10) inside the engagement passage (P), a section with a shape flaring downwardly, the frame having a face for guiding (201) the contact wire extending from a top of the flared shape up to a passage for inserting (I) the contact wire into the engagement passage (P).

7. The device (1) according to any one of the preceding claims, **characterized in that** the frame (2) comprises first bearings (51) positioned along an axis of displacement (D) of the contact wire (10) inside the engagement passage (P) and intended to roll on the contact wire.

8. The device (1) according to the preceding claim, **characterized in that** the frame (2) comprises second bearings (52) distributed parallel to the axis of displacement (D), on an external face of the frame, the second bearings being intended to roll on a second contact wire (11) adjacent to the contact wire intended to be located in the engagement passage of the device.

9. The device (1) according to any one of the preceding claims, **characterized in that** it comprises an inclinometer (60) .

10. The device (1) according to the preceding claim, **characterized in that** it comprises a pole (7), and **in that** the inclinometer (60) is carried by the pole.

11. The device (1) according to any one of the preceding claims, **characterized in that** it comprises a mobile electronic unit (6) provided with display means (61),
and **in that** it comprises wireless data transmission means (34) coupled to the means for determining (32) a thickness (E), the transmission means being adapted to communicate with the mobile electronic unit, the display means being adapted to display the thickness (E) of the contact wire (10) .

12. The device (1) according to claims 10 and 11, **characterized in that** the mobile electronic unit (6) comprises the inclinometer (60), the mobile electronic unit comprising means for assisting (62) in the positioning of the pole (7) according to an inclination suited to the measurement of the thickness (E) of the contact wire (10).

13. The device (1) according to any one of claims 11 and 12, **characterized in that** the mobile electronic unit (6) is set with a minimum thickness value of the contact wire (10) below which the mobile electronic unit is programmed to emit an alert.
